# Europäisches Patentamt
## European Patent Office
## Office européen des brevets

(19)

(11) Veröffentlichungsnummer: **0 212 331 B1**

(12) **EUROPÄISCHE PATENTSCHRIFT**

(45) Veröffentlichungstag der Patentschrift: **19.06.91**

(51) Int. Cl.⁵: **F16L 27/06**, F16L 27/02, F16L 51/00, F01N 7/08

(21) Anmeldenummer: **86110255.6**

(22) Anmeldetag: **25.07.86**

(54) **Verbindung zweier Rohre einer Leitung für heisse Medien.**

(30) Priorität: **30.07.85 DE 3527213**

(43) Veröffentlichungstag der Anmeldung:
**04.03.87 Patentblatt 87/10**

(45) Bekanntmachung des Hinweises auf die
Patenterteilung:
**19.06.91 Patentblatt 91/25**

(84) Benannte Vertragsstaaten:
**BE DE FR GB IT SE**

(56) Entgegenhaltungen:
**EP-A- 0 103 676**
**CH-A- 635 662**
**DE-A- 2 701 022**
**DE-A- 3 002 446**
**DE-A- 3 241 750**

(73) Patentinhaber: **Witzenmann GmbH**
**Metallschlauch-Fabrik Pforzheim**
**Östliche Karl-Friedrich-Strasse 134**
**W-7530 Pforzheim(DE)**

(72) Erfinder: **Faber, Bernd, Dr.-Ing.**
**Walther Rathenaustrasse 68**
**W-7530 Pforzheim(DE)**
Erfinder: **Gropp, Reinhard, Dipl.-Ing.**
**In der Laier 17**
**W-7540 Neuenbürg-Arnbach(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**W-7500 Karlsruhe 1(DE)**

## Beschreibung

Die Erfindung betrifft eine Verbindung zweier Rohre einer Leitung für heiße Medien, insbesondere Abgasleitung von Kraftfahrzeugen, wobei die aufeinander zugerichteten Rohrenden flexibel axial, lateral und angular zueinander beweglich dicht miteinander verbunden und gegeneinander geführt sind, ein die Rohrenden miteinander verbindender Ringraum wenigstens teilweise von diesen mitgebildet ist, im Ringraum wenigstens ein als Ring ausgebildetes Dichtkissen mit gedämpft federnden Eigenschaften in Radial- und Axialrichtung gehalten angeordnet ist, und die Rohrenden radial und gegebenenfalls axial über das Dichtkissen gegeneinander abgestützt sind.

Eine derartige Verbindung ist durch die DE-A1-27 01 022 bekannt. Sie erfüllt die Forderung nach einer platzsparenden, außen glatten und in Axialrichtung äußerst kurz bauenden Gestaltung, wobei das Dichtkissen mit gedämpft federnden Eigenschaften einerseits die Dichtfunktion erfüllt und zum anderen unter Eigenverformung durch Axial-, Lateral - und Angularbewegungen auftretenden Kräfte flexibel aufnimmt sowie diese Bewegungen in jede für sich konstruktiv durch entsprechende Ausbildung des Dichtkissens vorher bestimmbarer Weise zuläßt, wobei hier auch gegenüber anderen bekannnten Konstruktionen auftretende Torsionskräfte bzw. -bewegungen gleichrangig übernommen werden können. Insgesamt ist also eine Integration von Dichtwirkung und Leitungskraftübertragung im Dichtkissen und damit in einem Bauteil vorhanden, wobei durch dieses Bauteil in konstruktiv vorher bestimmbarer Weise auch eine von der Linearität abweichende, insbesondere progressive Verformungskennlinie sowie eine entsprechend den jeweiligen Anforderungen mehr oder weniger starke Dämpfung der Bewegungen sowie der Schallübertragung möglich ist.

Andererseits ist aber die Dichtwirkung des Dichtkissens problematisch, da sie stark von der vorher beschriebenen Gestaltung des Dichtkissens je nach den Umständen des jeweiligen Anwendungsfalles abhängt.

Aufgabe der Erfindung ist es daher, eine Verbindung der Eingangs genannten Art so auzubilden, daß unabhängig von der Gestaltung des Dichtkissens die erforderliche, möglichst vollständige Dichtwirkung des Dichtkissens immer erreichbar ist.

Diese Aufgabe ist erfindungsgemäß dadurch gelöst, daß in das Dichtkissen wenigstens eine sich über den gesamten radialen Bereich des Ringraumes erstreckende Dichtfolie eingebettet ist.

Durch diese Maßnahme bildet die Dichtfolie eine dichtende Membran als Schottwand, die es ermöglicht, bei den übrigen Materialien bzw. Querschnitten des Dichtkissens die Frage der Abdichtung weniger zu beachten. Dabei ist die in das Dichtkissen eingebettete Dichtfolie durch das Dichtkissen allseits abgestützt, in ihrer Lage also auch im Hinblick auf unterschiedliche Betriebsbedingungen gesichert, so daß sie besonders dünnwandig und damit besonders flexibel ausgebildet werden kann, ohne der Gefahr einer mechanischen Beeinträchtigung zu unterliegen.

In Ergänzung kann vorgesehen sein, daß das Dichtkissen mit einer Dichtfolie umwickelt bzw. bandagiert ist.

Was die Ausbildung der Dichtfolie betrifft, kann diese als eine Knitterfolie aus Metall gestaltet sein, wobei als Metall Edelstahl oder Aluminium vorgesehen werden kann.

Ferner kann vorgesehen sein, daß die Dichtfolie wenigstens eine umlaufende, radial und / oder axial gerichtete Dehnwelle aufweist zur Kompensation eventuell auftretender Spannungen.

Nach einem vom vorstehenden ausgehenden Lösungsweg kann vorgesehen sein, daß das eine Rohrende koaxial das andere unter Bildung des Ringraumes zwischen den Rohrenden übergreifend ausgebildet ist. Hier wird also der Ringraum radial zwischen den beiden Rohrenden angeordnet und darin das Dichtkissen untergebracht.

Nach einem anderen Lösungsweg ist vorgesehen, daß der Ringraum außen durch eine zu den Rohrenden koaxiale Hülse, Manschette od. dgl. begrenzt ist und daß diese mit entständigen, nach radial innen gerichteten Einbördelungen wenigstens mittelbar gegen nach radial außen gerichtete Bunde der Rohrenden, zwischen denen das Dichtkissen angeordnet ist, in Axialrichtung und ggf. Radialrichtung abgestützt ist. Hier ist also der Ringraum im wesentlichen in Axialrichtung zwischen den Rohrenden angeordnet und wird nach außen durch die Hülse od. dgl. begrenzt, durch die auch die Rohrenden gegeneinander und das Dichtkissen gehalten werden.

Zweckmäßig ist es im allgemeinen, wenn in Axialrichtung der Leitung nebeneinander wenigstens zwei Dichtkissen angeordnet sind. Dabei können die Dichtkissen einen im wesentlichen rechtekkigen Querschnitt aufweisen, es besteht jedoch insbesondere für den ersten Lösungsweg auch die Möglichkeit, daß das jeweilige Dichtkissen einen im wesentlichen V-förmigen Querschnitt aufweist und mit seinen Schenkeln an den Rohrenden anliegt, wobei bei zwei nebeneinander angeordneten Dichtkissen diese mit dem die Schenkel verbindenden Quersteg oder den freien Schenkelenden aneinanderliegend angeordnet sein können. Selbstverständlich besteht auch die Möglichkeit der Verwendung anderer geeigneter Dichtkissenquerschnitte, so beispielsweise eine kreisförmigen Querschnittes, eines U-förmigen Querschnittes mit in eine Radialrichtung weisendem Quersteg und in die andere Radialrichtung weisenden freien Schenkelenden etc., wobei gegebenenfalls selbstverständlich die Dichtkissen aufnehmende Konstruktion bezüglich der Querschnittsausbildung der Ringkammer angepaßt sein muß.

Was die Axialabstützung zwischen Rohrenden und Dichtkissen betrifft, so kann diese durch Querschnittsänderungen und dadurch entsprechend gebildete Abstätze der Rohrenden gegeben sein, es können jedoch hierzu auch in umlaufende Nuten der Rohrenden eingesetzte Sprengringe od. dgl. Verwendung finden.

Ferner kann es zweckmäßig sein, daß die freien Rohrenden um das zugeordnete freie Schenkelende des Dichtkissens dieses dabei einklemmend umgebördelt sind und/oder das das jeweilige freie Schenkelende das Dichtkissens durch einen radial gegengesetzten Klemmring gegen die benachbarte Rohrwand verspannt ist. Eine solche Einspannung der Kissenringlippen führt zu einer besonderen ggf. zusätzlichen Erhöhung der Dichtungswirkung, was beim Auftreten hoher Temperaturen wünschenswert sein kann, da dann in besonderem Maße mit einem Kriechen des Mediums zu rechnen ist. Außerdem ergibt sich aber eine definierte und über die Ausbildung der Dichtkissen einstellbare Torsionsabstützung für die Rohrenden.

Im Hinblick auf den vorstehend zuerst genannten Lösungsweg kann die Gestaltung auch so vorgenommen werden, daß die Rohrenden radial gerichtete Bunde aufweisen, zwischen denen das Dichtkissen ggf. radial innen durch wenigstens eines der Rohrenden gestützt angeordnet ist, daß von einem der Bunde der axialübergreifende und das Dichtkissen außen abstützende Teil ausgeht, daß sich an das freie Ende dieses Teiles eine radial nach außen gerichtete Stützfläche anschließt, daß der andere Bund das Teil bzw. die Stützfläche über Öffnungen mit endständigen Verlängerungen durchgreift, daß die Verlängerungen in axialem Abstand von der Stützfläche zu Gegenstützflächen radial nach außen geführt sind, und daß zwischen Stützfläche und Gegenstützflächen wenigstens ein Stützkissen mit gedämpftfedernden Eigenschaften angeordnet ist. Hier sind also die Rohrenden sich teilweise durchdringend über das Stützkissen ineinander gehängt, wobei das Stützkissen, das durch den axial übergreifenden Teil sowie eine zusätzliche endständige Umbördelung der Stützfläche und/oder der Gegenstützflächen auch radial gehalten sein kann, in erheblichem Maße an der Kraftaufnahme und dabei einer entsprechenden Entlastung des Dichtkissens beteiligt ist.

Das hier erwähnte Stützkissen kann selbstverständlich auch bei allen anderen vorbeschriebenen Konstruktionen bei deren entsprechende Ausbildung zusätzlich vorgesehen seien. Es kann ein umlaufender Ring sein. Eine andere Möglichkeit besteht darin, daß das Stützkissen durch mehrere symmetrisch über den Umfang verteilte Kissenelemente gebildet ist, die radial außen durch Verlängerungen der Stützflächen und/oder Gegenstützflächen gehalten sind.

Geht man von dem zweiten Lösungsweg aus, so können auch hier zwischen Einbördelungen und Bunden ringförmig ausgebildete oder symmetrisch über den Umfang verteilte Stützkissen mit gedämpftfedernden Eigenschaften angeordnet sein, wozu das vorstehend gesagte gleichermaßen gilt. Auch besteht hier die Möglichkeit, daß die Bunde aufeinander zu schrägverlaufend ausgebildet und die Einbördelungen sowie die angrenzenden Flächen des Dichtkissens dazu parallel sind. Hier gehen also über die Stützkissen sowohl Radial- als auch Axialkräfte, wobei sich für das Dichtkissen eine trapezförmige Querschnittsgestaltung ergibt. Zur Radialabstützung des Dichtkissens nach innen können zweckmäßigerweise die Rohrenden herangezogen werden.

Was das Dichtkissen bzw. das jeweilige Stützkissen und dessen Ausbildung betrifft, so kann dieses aus temperatur- und korrosionsbeständigem Keramik- oder Metallmaterial in Form eines Faser- oder Drahtvlieses, -geflechtes, -gewebes, -gestrickes od. dgl. gepreßt sein, wobei zur Minderung insbesondere des inneren Verschleißes das Kissen wenigstens teilweise aus einem Material mit Gleitlagereigenschaften bestehen oder mit diesem beschichtet sein kann. Außerdem kann mit dem Kissen ein zugesetztes Gleit- und Dichtmittel verpreßt sein.

Als besonders vorteilhaft kann es sich je nach Einzelfall erweisen, daß das Dichtkissen bzw. das jeweilige Stützkissen wenigstens einen Stützkörper mit gegenüber dem Kissenmaterial größerer Härte bzw. Festigkeit eingepreßt enthält. Solche Stützkörper lassen insbesondere die Einstellung eines progressiven Verformungsverhaltens des Kissens zu, da sie volumenmäßig die Menge des übrigen Kissenmaterials einschränken und nach dessen Verformung mit ihrer wesentlich höheren Stützwirkung zur Geltung kommen.

Schließlich ist es vorteilhaft, wenn radial innerhalb der Dichtkissen und ggf. der Stützkissen eine Wärmeisolierung angeordnet ist. Hiermit ist ohne besonderen Aufwand ein erheblicher Schutz des Dichtkissen, des Stützkissens und ggf. auch des sie enthaltenden Ringraumes gegenüber extremen Temperaturbelastungen möglich.

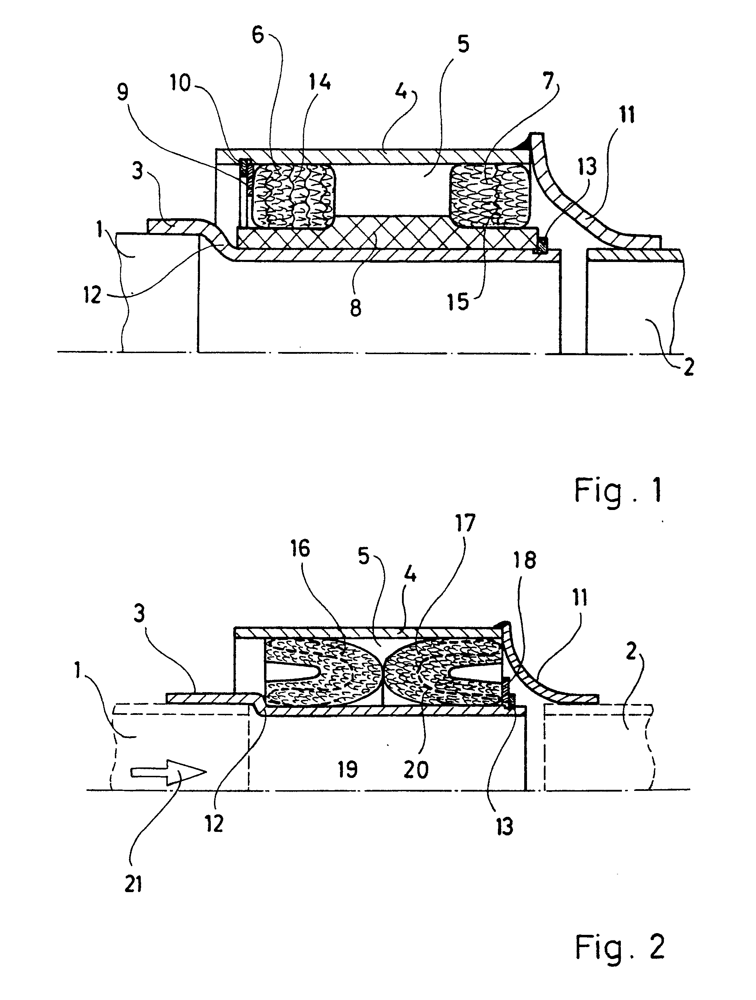

Weitere Einzelheiten der Erfindung ergeben sich aus der nachfolgenden Beschreibung von sechs Ausführungsformen, die in der Zeichnung in den Figuren 1 bis 6 im halbseitigen Radialschnitt einer Rohrleitung dargestellt sind, wobei die vier ersten Beispiele einem ersten Konstruktionsprinzip und die beiden letzten Beispiele einem zweiten Konstruktionsprinzip folgen.

Fig. 1 zweigt zwei Leitungsrohre 1, 2, auf denen zueinander koaxiale Rohrenden 3, 4 aufgesteckt und in nicht näher dargestellter, sich nach den Gegebenheiten des Einzelfalles richtender Weise festgelegt sind. Die Rohrenden 3, 4 billden zwischen sich einen Ringraum 5, in dem zwei im Querschnitt im wesentlichen rechteckige Dichtkissen 6, 7 sitzen, die als geschlossene Ringe ausgebildet sind. Die Dichtkissen sitzen auf einer zwischen ihnen und dem Rohrende 3 angeordneten, wärmeisolierenden Hülse 8, gegen deren dargestellte radiale Querschnittsänderungen sie in Axialrichtung gegeneinander abgestützt sind. Voneinander fort finden die Dichtkissen 6, 7 ihre Axialabstützung über einen Stützring 9 und einen im Rohrende 4 sitzenden Sprengring 10 einerseites und ein mit dem Rohrende 4 verschweißtes Reduzierstück 11 andererseits. Die Hülse 8 ist in Axialrichtung am Rohrstück 3 einerseits gegen eine Querschnittsänderung 12 und andererseits einen aufgesetzten Sprengring 13 abgestützt.

Die beschriebene und dargestellte Ausbildung sorgt für eine axiale, laterale und angulare geggenseite Abstützung der Rohrenden 3, 4 und der Dichtkissen 6, 7 und damit im Ergebnis der Rohrenden 3, 4 gegeneinander.

Die Dichtkissen können aus einem Metallgestrike od. dgl. gepreßt sein, wobei eine sich über den gesamten Radialquerschnitt der Dichtkissen erstreckende Dichtfolien 14, 15 miteingepreßt ist.

Wie ersichtlich, baut die dargestellte Konstruktion in Radialrichtung im wesentlichen im Bereich des Leitungsquerschnittes und ist in Axialrichtung äußerst kurz. In Abwandlung vom Beispiel gemäß Fig. 1 können die beiden Dichtkissen 6, 7 auch durch ein einziges, in Axialrichtung weiter ausgebildetes Dichtkissen ersetzt sein. Auch besteht die Möglichkeit, die Sprengringe 10, 13 durch Umbördelungen der Rohrenden 3, 4 zu ersetzen, womit allerdings in gewisser Weise ein endgültiger Verschluß gegeben wäre.

Bei der Konstruktion gemäß Fig. 2 besteht Übereinstimmung mit Fig. 1 hinsichtlich der Rohe 1, 2, der Rohrenden 3, 4 und des Reduzierstückes 11.

Andererseits sind hier jedoch Dichtkissen 16, 17 in den Ringraum 5 eingesetzt, die im wesentlichen V-förmigen Querschnitt aufweisen, wobei sie mit den freien Schenkeln voneinander fort gerichtet angeordnet sind und sich mit den die Schenkel miteinander verbindenden Bereichen gegeneinander abstützen. Das Dichtkissen 16 ist am Rohrende 3 in Axialrichtung wieder über eine Querschnittsänderung 12 entsprechend Fig. 1 angestützt, während das Dichtkissen 17 sich axial einerseits gegen das Reduzirestück 11 und andererseits über eine Stützscheibe 18 gegen den Sprengring 13 abstützt.

In das Dichtkissen 16, 17 ist jeweils eine Knitterfolie 19, 20 aus Edelstahl eingeformt, die sich über den gesamten radialen Querschnitt des Ringraumes 5 erstreckt, wozu sie im vorliegenden Falle, wie dargestellt, mit ihren Enden umgeschlagen und an die Außenfläche der Dichtkissen 16, 17 geführt ist. Sowohl bei den vorstehend beschriebenen als auch bei den noch zu beschreibenden Ausführungsformen besteht selbstverständlich die Möglichkeit, das Dichtkissen zusätzlich mit einer Dichtfolie zu ummanteln bzw. zu bandagieren.

Die in Fig. 2 veranschaulichte Ausführungsform hat zwischen Dichtkissen 16 und Rohrende 4 keine Axialabstützung für einen Einbaufall, bei dem diese nicht erforderlich ist. Dann aber ist eine besonders einfache Montage möglich, indem das Rohrende 4 einfach übergeschoben werden kann. Andererseits kann sich eine solche Bauform für einen Fall eignen, bei dem entsprechend große Axialbewegungen zwischen den Rohrenden zugelassen werden sollen, die dann über die axiale Verschiebbarkeit des Rohrendes 4 auf den Dihtkissen 16, 17 möglich ist.

Wie aus Fig. 2 schließlich ersichtlich, sollte der Einbau der dargestellten Rohrverbindung so erfolgen, daß das Medium in Richtung des Pfeiles 21 strömt.

Die Ausführungsform gemäß Fig. 2 geht von Rohren 22, 23 aus, auf denen Rohrenden 24, 25 in der allgemein anhand der Fig. 1 und 2 bereits geschriebenen Weise sitzen. Die in den damit gebildeten Ringraum 26 eingesetzten Dichtkissen 27, 28 entsprechen im wesentlichen wieder denen der Fig. 2.

In Abwandlung hierzu sind jedoch die freien Enden der Schenkel mit den angrenzenden Bauteilen verklemmt. Hierzu ist das freie Ende 29 des Rohrendes 25 nach innen umgebördelt, was durch axiale Einschlitzungen dieses Rohrendes erleichtert werden kann. Andererseits ist der radial innen liegende Schenkel des Dichtkissens 27 durch einen Klemmring 30 gegen das Rohrende 24 gepreßt. Was das Dichtkissen 28 betrifft, so ist dessen radial außen liegender Schenkel zwischen Rohrende 25 und Reduzierstück 31 eingeklemmt, und der radial innen liegende Schenkel ist durch eine Umbördelung 32 des Rohrendes 24 entsprechend festgelegt.

Diese Festlegung der freien Schenkelenden der Dichtkissen 27, 28 führt einmal zu einer besonders guten Abdichtung, die im übrigen auch hier wieder durch eine Folie entsprechend Fig. 2 grundsätzlich gegeben ist. Sie führt aber auch zu einer Abstützung der Rohrenden 24, 25 in Torsionsrichtung über die Dichtkissen 27, 28, wobei auch hier Bewegungsfreiheit und Dämpfung durch den Kissenaufbau gestimmt werden können. Demgegenüber war bei den Ausführungsformen gemäß Fig. 1 und 2 eine Torsionsbewegung in grundsätzlich ungehinderter Weise möglich, wobei eine gewisse Steuerung auch im Hinblick auf eine Dämpfung jedoch von der Festigkeit des Sitzes der Dichkissen zwischen den Rohrenden abhängt.

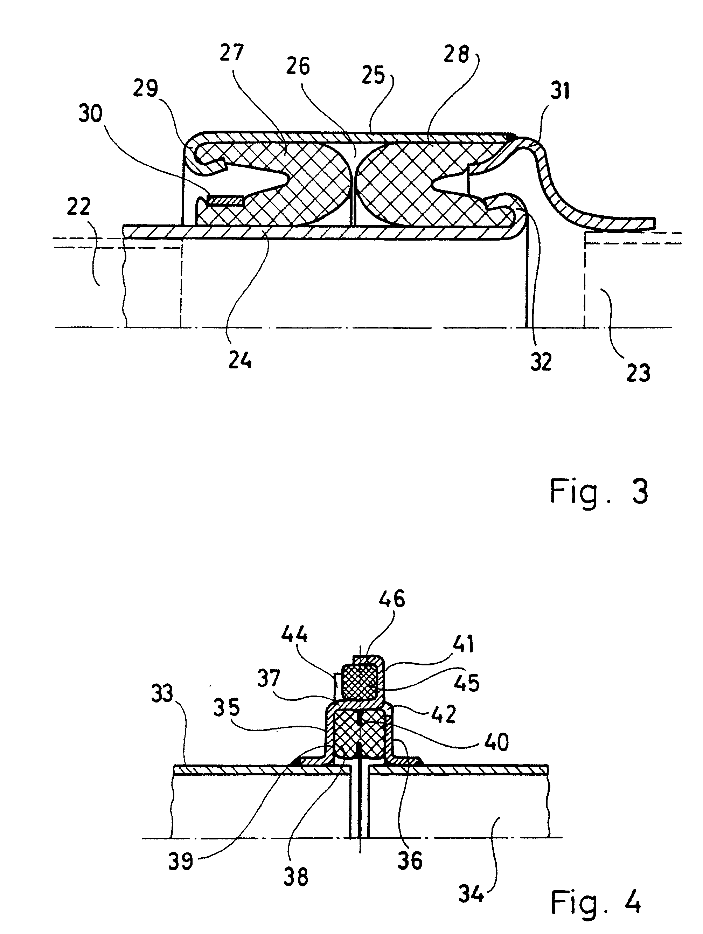

Die Bauform gemäß Fig. 4 beruht im Prinzip auf der anhand der Fig. 1 bis 3 ersichtlichen Konstruktionsweise. Hier sind wieder Rohrenden 33, 34 vorhanden, auf die radiale Bunde 35, 36 aufgeschweißt sind, wobei sich an den Bund 35 der axial das Rohrende 34 übergreifende Teil 37 anschließt um auch hier also die im Prinzip zwischen einander übergreifenden Rohrenden gebildete Ringkammer, die gegenüber der dargestellten Anordnung bei der Trennstelle zwischen den beiden Rohrenden durchaus auch beispielsweise weiter nach rechts verlagert sein kann, wenn nur der Teil 37 entsprechend weiter nach rechts gesetzt ist.

In der Ringkammer ist ein Dichtkissen 38 angeordnet, das im vorliegenden Falle zusätzlich zu der nicht dargestellten Dichtfolie von einem Folienmantel 39 umgeben ist, um die nötige Dichtwirkung zu verbessern. Der Folienmantel weist außerdem zwei umlaufende, radial gerichtete Dehnwellen 40 auf, um ein eventuelles Reißen der Folie zu verhindern.

Wie aus Fig. 4 ferner ersichtlich ist, schließt sich an das freie Ende des Teiles 37 eine radial nach außen gerichtete Stützfläche 41 an, während der andere Bund 36 das Teil 37 bzw. die Stützfläche 41 über Öffnungen mit endständigen Verlängerungen 42 durchgreift. Die Verlängerungen 42 wieder rum sind in axialem Abstand gegenüber der Stützfläche 41 in Gegenstützflächen 44 radial nach außen geführt. Schließlich ist zwischen Stützfläche 41 und Gegenstützflächen 44 wenigstens ein Stützkissen 45 mit gedämpftfedernden Eigenschaften angeordnet, das als umlaufender Ring ausgebildet sein kann, jedoch auch aus mehreren, symmetrisch über den Umfang verteilten Einzelkissen bestehen kann. Zur radialen Halterung kann die Stützfläche 41 außen noch eine Verlängerung 46 aufweisen, was in umgekehrter Weise selbstverständlich gleichermäßen ausgeht von den Gegenstützflächen 44 möglich wäre.

So bildet Fig. 4 ein Beispiel dafür, wie die Konstruktion in axialer Richtung auf ein Mindestmaß reduziert sein kann, wobei andererseits das Dichtkissen 38 durch das oder die Stützkissen 45 entlastet ist.

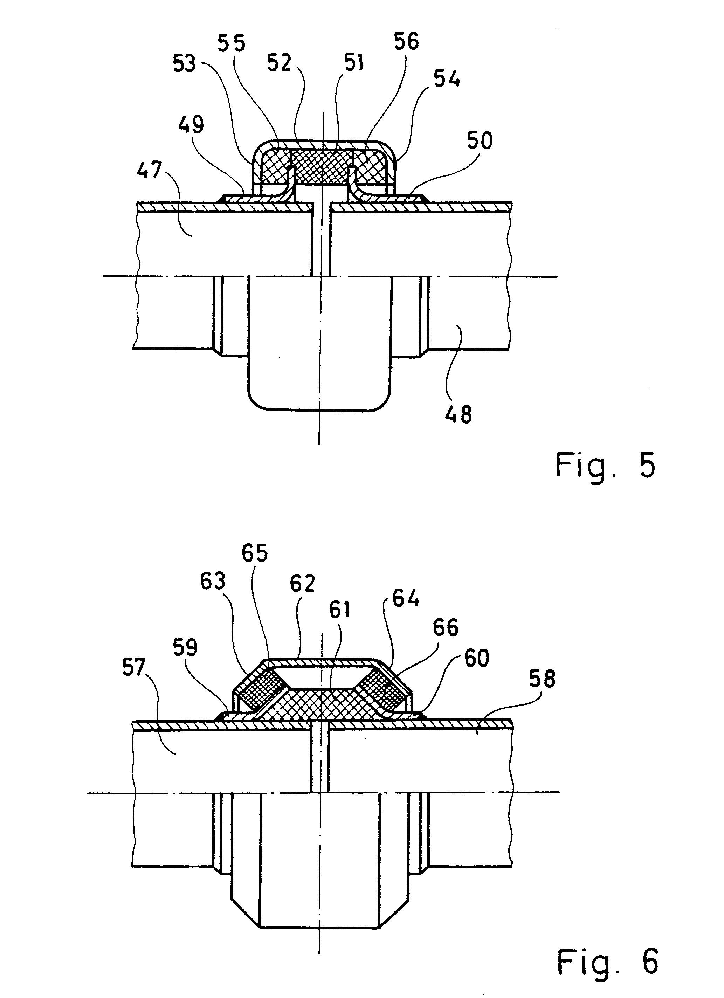

Die Fig. 5 und 6 zeigen Beispiele dafür, wie der das jeweilige Dichtkissen aufnehmende Ringraum im wesentlichen axial zwischen zwei Rohrenden angeordnet ist. Auch hier ist das Dichtkissen wieder mit der bereits früher erwähnten Dichtfolie versehen.

Hierzu sind gemäß Fig. 5 die Rohrenden 47, 48 mit radialen Bunden 49, 50 versehen, zwischen denen das Dichtkissen 51 sitzt, wobei hier das Dichtkissen 51 durch die freien Kanten der Bunde 49, 50 nach radial innen abgestützt ist. Die radial äußere Abstützung des Dichtkissens 51 geschieht durch eine Hülse 52, deren Enden Einbördelungen 53, 54 aufweisen, die über Stützkissen 55, 56 in Axialrichtung ihrer Abstützung gegen die Bunde 49, 50 finden und damit die Rohrenden 47, 48 gegeneinander spannen, wodurch auch die Verspannung der Bunde 49, 50 gegen das Dichtkissen 51 gegeben ist. Die Hülse 52 kann ein bleibend aufgeformtes Teil sein. Selbstverständlich besteht auch die Möglichkeit der Ausbildung nach Art einer Schelle od. dgl.

Die Ausführungsform gemäß Fig. 6 entspricht im wesentlichen der gemäß Fig. 5. Auch hier Rohrenden 57, 58 mit radialen Bunden 59, 60 und zwischen gesetztes Dichtkissen 61, außen umlaufende Hülse 62 mit radialen Einbördelungen 63, 64 sowie zwischen diese und die Bunde 59, 60 eingelegte Stützkissen 65, 66.

Der Unterschied gegenüber Fig. 5 besteht darin, daß die Bunde 59, 60 aufeinanderzu schräg gestellt sind, wobei die Einbördelungen 63, 64 eine entsprechend angepaßte Schrägstellung aufweisen sowie gleichermaßen die Seitenflächen des Dichtkissens 61. Dadurch ist das Dichtkissen 61 nach radial außen durch die Bunde 59, 60 abgestützt, während im vorliegenden Falle die innere Radialabstützung des Dichtkissens 61 durch die Rohrenden 57, 58 geschieht.

In beiden Fällen ist die Aufgabenverteilung zwischen Dichtkissen und Stützkissen grundsätzlich wieder so wie am Beispiel der Fig. 4 erläutert. Nach Fig. 5 und 6 können aber die Stützkissen, wenn sie als umlaufende Ringe ausgebildet sind, gleichzeitig an der Aufgabe der Abdichtung teilnehmen, wodurch sich praktisch eine hintereinandergeschaltete Doppeldichtung ergibt.

## Ansprüche

1. Verbindung zweier Rohre (1, 2; 22, 23) einer Leitung für heiße Medien, insbesondere Abgasleitung von Kraftfahrzeugen, wobei die aufeinander zugerichteten Rohrenden (3, 4; 24, 25; 33, 34; 47, 48; 57, 58) flexibel axial, lateral und angular zueinander beweglich dicht miteinander verbunden und gegeneinander geführt sind, ein die Rohrenden (3, 4; 24, 25; 33, 34; 47, 48; 57, 58) miteinander verbindender Ringraum (5, 26) wenigstens teilweise von diesem mitgebildet ist, im Ringraum wenigstens ein als Ring ausgebildetes Dichtkissen (6, 7; 16, 17; 27, 28; 38, 51, 61) mit gedämpft federnden Eigenschaften in Radial- und Axialrichtung gehalten angeordnet ist, und die Rohrenden (3, 4; 24, 25; 33, 34; 47, 48; 57, 58) radial und gegebenenfalls axial über das Dichtkissen gegeneinander abgestützt sind,
dadurch gekennzeichnet,
daß in das Dichtkissen (6, 7; 16, 17) wenigstens eine sich über den gesamten radialen Berich des Ringraumes (5) erstreckende Dichtfolie (14, 15; 19, 20) eingebettet ist.

2. Verbindung nach Anspruch 1, dadurch gekennzeichnet, daß das Dichtkissen (38) mit einer Dichtfolie (39) umwickelt bzw. bandagiert ist.

3. Verbindung nach Anspruch 1 oder 2, dadurch gekennzeichnet, daß die Dichtfolie eine Knitterfolie aus Metall ist.

4. Verbindung nach einem der Ansprüche 1 bis 3, dadurch gekennzeichnet, daß die Folie aus Edelstahl oder Aluminium besteht.

5. Verbindung nach einem der Ansprüche 1 bis 4, dadurch gekennzeichnet, daß die Dichtfolie (39) wenigstens eine umlaufende, radial und/oder axial gerichtete Dehnwelle (49) aufweist.

6. Verbindung nach Anspruch 1, dadurch gekennzeichnet, daß das eine Rohrende (4, 25, Teil 37) koaxial das andere (3, 24, 34) unter Bildung des Ringraumes (5, 26) zwischen den Rohrenden übergreifend ausgebildet ist.

7. Verbindung nach Anspruch 1, dadurch gekennzeichnet, daß der Ringraum außen durch eine zu den Rohrenden (47, 48; 57, 58) koaxiale Hülse (52, 62), Manschette od. dgl. begrenzt ist und daß diese mit endständigen, nach radial innen gerichteten Einbördelungen (53,54; 63, 64) wenigstens mittelbar gegen nach radial außen gerichtete Bunde (49, 50; 59,60) der Rohrenden, zwischen denen das Dichtkissen (51, 61) angeordnet ist, in Axialrichtung und ggf. Radialrichtung abgestützt ist.

8. Verbindung nach einem der vorhergehenden Ansprüche, dadurch gekennzeichnet, daß in Axialrichtung der Leitung nebeneinander wenigstens zwei Dichtkissen (6, 7; 16, 17; 27, 28) angeordnet sind.

9. Verbindung nach einem der vorhergehenden Ansprüche, dadurch gekennzeichnet, daß das Dichtkissen (6, 7, 38, 51, 61) einen im wesentlichen rechteckigen Querschnitt aufweist.

10. Verbindung nach Anspruch 6, dadurch gekennzeichnet, daß das Dichtkissen (16, 17; 27, 28) einen im wesentlichen V-förmigen Querschnitt aufweist und mit seinen Schenkeln an den Rohrenden (3, 4; 24, 25) anliegt.

11. Verbindung nach Anspruch 10, dadurch gekennzeichnet, daß bei zwei nebeneinander angeordneten Dichtkissen (16, 17; 27, 28) diese mit dem die Schenkel verbindenden Quersteg oder den freien Schenkelenden aneinanderliegend angeordnet sind.

12. Verbindung nach einem der vorhergehenden Ansprüche, dadurch gekennzeichnet, daß die Axialabstützung zwischen Rohrenden (3, 4) und Dichtkissen (6, 7; 16, 17) durch Querschnittsänderungen (11, 12) der Rohrenden gegeben ist

13. Verbindung nach Anspruch 6, dadurch gekennzeichnet, daß die Axialabstützung zwischen Rohrenden (3, 4) und Dichtkissen (6, 7; 17) durch in umlaufende Nuten der Rohrenden eingesetzte Sprengringe (10, 13) od. dgl. gegeben ist.

14. Verbindung nach Anspruch 10, dadurch gekennzeichnet, daß die freien Rohrenden (29, 32) um das zugeordnete freie Schenkelende des Dichtkissens (27, 28) dieses dabei einklemmend umgebördelt sind.

15. Verbindung nach Anspruch 10, dadurch gekennzeichnet, daß das jeweilige freie Schenkelende des Dichtkissens (27, 28) durch einen radial gegengesetzten Klemmring (30) gegen die benachbarte Rohrwand (24) verspannt ist.

16. Verbindung nach Anspruch 6, dadurch gekennzeichnet, daß die Rohrenden (33, 34) radial gerichtete Bunde (35, 36) aufweisen, zwischen denen das Dichtkissen (38) gegebenenfalls innen durch wenigstens eines der Rohrenden gestützt angeordnet ist, daß von einem der Bunde (35) der axial übergreifende und das Dichtkissen außen stützende Teil (37) ausgeht, daß sich an das freie Ende dieses Teiles eine radial nach außen gerichtete Stützfläche (41) anschließt, daß der andere Bund (36) das Teil (37) bzw. die Stützfläche (41) über Öffnungen mit endständigen Verlängerungen (42) durchgreift, daß die Verlängerungen in axialen Abstand von der Stützfläche zu Gegenstützflächen (44) radial nach außen geführt sind, und daß zwischen Stützfläche und Gegenstützfläche wenigstens ein Stützkissen (45) mit gedämpft-federnden Eigenschaften angeordnet ist.

17. Verbindung nach Anspruch 16, dadurch gekennzeichnet, daß das Stützkissen (45) ein umlaufender Ring ist.

18. Verbindung nach Anspruch 16, dadurch gekennzeichnet, daß das Stützkissen (45) durch mehrere symmetrisch über den Umfang verteilte Kissenelemente gebildet ist, die radial außen durch Verländerungen (46) der Stützfläche (41) und/oder Gegenstützflächen (44) gehalten sind.

19. Verbindung nach Anspruch 7, dadurch gekennzeichnet, daß zwischen Einbördelungen (53, 54; 63, 64) und Bunden (49, 50; 59, 60) ringförmig ausgebildete oder symmetrisch über den Umfang verteilte Stützkissen (55, 56; 65, 66) mit gedämpft-federnden Eigenschaften angeordnet sind.

20. Verbindung nach Anspruch 7 oder 19, dadurch gekennzeichnet, daß die Bunde (59, 60) aufeinander zu schräg verlaufend ausgebildet und die Einbördelungen (63, 64) sowie die angrenzenden Flächen des Dichtkissens (61) dazu parallel sind.

21. Verbindung nach einem der Ansprüche 7, 19 oder 20, dadurch gekennzeichnet, daß das Dichtkissen (61) radial innen durch die Rohrenden (57, 58) abgestützt ist.

22. Verbindung nach einem der vorhergehenden Ansprüche, dadurch gekennzeichnet, daß das Dichtkissen bzw. das Stützkissen aus temperatur- und korrosionsbeständigem Keramik- oder Metallmaterial in Form eines Faser- oder Drahtvlieses, -geflechtes, -gewebes, -gestrickes oder dgl. gepreßt ist.

23. Verbindung nach Anspruch 22, dadurch gekennzeichnet, daß das Dichtkissen bzw. das Stützkissen wenigstens teilweise aus einem Material mit Gleitlagereigenschaften besteht oder mit diesem beschichtet ist.

24. Verbindung nach Anspruch 22 oder 23, dadurch gekennzeichnet, daß das Dichtkissen bzw. das Stützkissen mit einem zugesetzten Gleit- und Dichtmittel verpreßt ist.

25. Verbindung nach einem der Ansprüche 22 bis 24, dadurch gekennzeichnet, daß das Dichtkissen bzw. das Stützkissen wenigstens einen Stützkörper mit gegenüber dem Kissenmaterial größerer Härte bzw. Festigkeit eingepreßt enthält.

26. Verbindung nach einem der vorhergehenden Ansprüche, dadurch gekennzeichnet, daß radial innerhalb der Dichtkissen und ggfl. der Stützkissen eine Wärmeisolierung (8) angeordnet ist.

**Claims**

1. Connection of two pipes (1, 2; 22, 23) of a conduit for hot media, especially an exhaust pipe of a motor vehicle, wherein the pipe ends (3, 4; 24, 25; 33, 34; 47, 48; 57, 58) directed towards one another are sealedly interconnected for flexible axial, lateral and angular relative movement and are guided against one another, an annular space (5, 26) connecting the pipe ends (3, 4; 24, 25; 33, 34; 47, 48; 57, 58) with one another being at least partially coformed by them, at least one seal cushion (6, 7; 16, 17; 27, 28; 38, 51, 61) with damped, resilient properties being arranged in the annular space, held in the radial and axial directions, and formed as an annulus, and the pipe ends (3, 4; 24, 25; 33, 34; 47, 48; 57, 58) are radially and, in given cases axially, supported against one another through the seal cushion,
characterised in that
at least one sealing foil (14, 15; 19, 20) extending over the entire radial region of the annular space (5) is embedded into the seal cushion.

2. Connection according to claim 1, characterised in that the seal cushion (38) is wrapped or bandaged with a sealing foil (39).

3. Connection according to claim 1 or 2, characterised in that the sealing foil is a creasable foil of metal.

4. Connection according to one of claims 1 to 3, characterised in that the foil consists of high-grade steel or aluminium.

5. Connection according to one of claims 1 to 4, characterised in that the sealing foil (39) comprises at least one peripheral, radially and/or axially directed expansion wave (40).

6. Connection according to claim 1, characterised in that the one pipe end (4, 25, part 37) is made coaxially grasping over the other (3, 24, 34), under formation of the annular space (5, 26) between the pipe ends.

7. Connection according to claim 1, characterised in that the annular space is externally limited by a sleeve (52, 62), socket or the like coaxial with the pipe ends (47, 48; 57, 58) and in that the sleeve, socked or the like is supported in the axial and, optionally, also in the radial direction by way of terminal, radially inwardly directed, inward crimped portions (53, 54; 63, 64) at least indirectly against radially outwardly directed collars (49, 50; 59, 60) of the pipe ends, between which the seal cushion (53, 61) is arranged.

8. Connection according to one of the preceding claims, caracterised in that at least two sealing cushions (6, 7; 16, 37; 27, 28) are arranged side-by-side in the axial direction of the conduit.

9. Connection according to one of the preceding claims, characterised in that the seal cushion (6, 7, 38, 51, 61) has a substantially rectangular cross-section.

10. Connection according to claim 6, characterised in that the seal cushion (16, 17; 27, 28) has a substantially V-shaped cross-section and rests with its legs on the pipe ends (3, 4; 24, 25).

11. Connection according to claim 10, characterised in that where two seal cushions (16, 17; 27, 28) are arranged side-by-side, these are arranged with the cross-piece connecting the legs or the free leg ends lying one against the other.

12. Connection according to one of the preceding claims, characterised in that the axial support between the pipe ends (3, 4) and seal cushions (6, 7; 16, 17) is given by variations (11, 12) of cross-section of the pipe ends.

13. Connection according to claim 6, characterised in that the axial support between pipe ends (3, 4) and seal cushions (6, 7; 17) is given by circlips (10, 13) or the like inserted into peripheral grooves of the pipe ends.

14. Connection according to claim 10, characterised in that the free pipe ends (29, 32) are crimped over around the associated free leg end of the seal cushion, thereby clamping the said leg and in.

15. Connection according to claim 10, characterised in that the free leg end in each case of the seal cushion (27, 28) is clamped by a radially opposite clamp ring (30) against the neighbouring pipe well (24).

16. Connection according to claim 6, characterised in that the pipe ends (33, 31) comprise radially directed collars (35, 36) between which the seal cushion (38) is arranged, optionally inwardly supported by at least one of the pipe ends; in that the part (37) grasping axially over and externally supporting the seal cushion stares from one of the collars (35); in that a radially outwardly directed support face (41) adjoins the free end of this part; in that the other collar (36) grasps through the part (37) or the support face (41) through openings with end prolongations (42); in that the extensions are led radially outwardly at a radial distance from the support face to counter-support faces (44); and in that between support face and counter-support face at least one support cushion with damped resilient properties is arranged.

17. Connection according to claim 16, characterised in that the support cushion (45) is a circumferential ring.

18. Connection according to claim 16, characterised in that the support cushion (45) is formed by a plurality of cushion elements which are symmetrically distributed over the circumference and held radially outwardly by extensions (46) of the support face (41) and/or counter-support faces (44).

19. Connection according to claim 7, characterised in that support cushions (55, 56; 65, 66) with damped resilient properties which are of annular formation or which are in symmetrical distribution over the circumference, are arranged between inwardly crimped portions (53, 54; 63, 64) and collars (49, 50; 59, 60).

20. Connection according to claim 7 or 19, characterised in that the collars (59, 60) are made extending obliquely towards one another and the inwardly crimped portions (63, 64) and the adjoining faces of the seal cushion (61) are parallel thereto.

21. Connection according to one of claims 7, 19 or 20, characterised in that the seal cushion (61) is radially inwardly supported by the pipe ends (57, 58).

22. Connection according to one of the preceding claims, characterised in that the seal cushion and/or the support cushion is pressed from temperature-resistant and corrosion-resistant ceramic or metal material in the form of a fibre or wire fleece, braid, woven fabric, knitted fabric or the like.

23. Connection according to claim 22, characterised in that the seal cushion and/or the support cushion consists at least partially of or is coated with a material with friction bearing properties.

24. Connection according to one of claims 22 or 23, characterised in that the seal cushion and/or the support cushion is pressed with an added lubricating and sealing agent.

25. Connection according to one of claims 22 to 24, characterised in that the seal cushion and/or the support cushion contains at least one pressed-in support body with greater hardness and/or strength than that of the cushion material.

26. Connection according to one of the preceding claims, characterised in that a thermal insulation (8) is arranged radially within the seal cushion and optionally within the support cushion.

## Revendications

1. Raccordement de deux tuyaux (1, 2; 22, 23) d'une conduite pour milieux chauds, en particulier d'une conduite de gaz d'échappement pour véhicules automobiles, dans lequel les extrémités de tuyau dirigées l'une vers l'autre (3, 4; 24, 25; 33, 34; 47, 48; 57, 58) sont reliées ensemble de façon flexible et étanche et guidées mutuellement de manière qu'elles soient déplaçables l'une par rapport à l'autre dans le sens axial, latéral et angulaire, un espace annulaire (5, 26) reliant les extrémités de tuyau (3, 4; 24, 25; 33, 34; 47, 48; 57, 58) entre elles est en même temps formé au moins partiellement par ces extrémités, un coussin d'étanchéité (6, 7; 16, 17; 27, 28; 38, 51, 61) réalisé comme un anneau, ayant des propriétés élastiques amorties, est disposé dans l'espace annulaire de manière qu'il y soit maintenu en direction radiale et en direction axiale, et les extrémités de tuyau (3, 4; 24, 25; 33, 34; 47, 48; 57, 58) sont appuyées l'une sur l'autre dans le sens radial et éventuellement dans le sens axial par l'intermédiaire du coussin d'étanchéité, caractérisé en ce que au moins une feuille d'étanchéité (14, 15; 19, 20), s'étendant sur toute l'aire radiale de l'espace annulaire (5), est noyée dans le coussin d'étanchéité (6, 7; 16, 17).

2. Raccordement selon la revendication 1, caractérisé en ce que le coussin d'étanchéité (38) est enveloppé ou enrubanné d'une feuille d'étanchéité (39).

3. Raccordement selon la revendication 1 ou 2, caractérisé en ce que la feuille d'étanchéité est une feuille métallique à froissement.

4. Raccordement selon une des revendications 1 à 3, caractérisé en ce que la feuille est en acier fin ou en aluminium.

5. Raccordement selon une des revendications 1 à 4, caractérisé en ce que la feuille d'étanchéité (39) présente au moins une onde circonférentielle de dilatation (49) orientée radialement et/ou axialement.

6. Raccordement selon la revendication 1, caractérisé en ce qu'une extrémité de tuyau (4, 25, partie 37) est conformée pour s'étendre coaxialement par-dessus l'autre extrémité de tuyau (3, 24, 34), avec formation de l'espace annulaire (5, 26) entre les extrémités de tuyau.

7. Raccordement selon la revendication 1, caractérisé en ce que l'espace annulaire est délimité extérieurement par une douille (52, 62), un manchon ou un élément analogue qui est coaxial aux extrémités de tuyau (47, 48; 57, 58) et que cet élément possède des rabats terminaux (53, 54; 63, 64) dirigés radialement vers l'intérieur, par lesquels il est appuyé au moins indirectement, en direction axiale et éventuellement en direction radiale, sur des collets (49, 50; 59, 60) dirigés radialement vers l'extérieur et solidaires des extrémités de tuyau, collets entre lesquels est disposé le coussin d'étanchéité (51, 61).

8. Raccordement selon une des revendications précédentes, caractérisé en ce qu'au moins deux coussins d'étanchéité (6, 7; 16, 17; 27, 28) sont placés l'un à côté de l'autre dans le sens de l'axe de la conduite.

9. Raccordement selon une des revendications précédentes, caractérisé en ce que le coussin d'étanchéité (6, 7, 38, 51, 61) possède une section droite essentiellement rectangulaire.

10. Raccordement selon la revendication 6, caractérisé en ce que le coussin d'étanchéité (16, 17; 27, 28) possède une section droite essentiellement en V et est appliqué par ses branches contre les extrémités de tuyau (3, 4; 24, 25).

11. Raccordement selon la revendication 10, caractérisé en ce que, en cas d'utilisation de deux coussins d'étanchéité (16, 17; 27, 28) placés l'un à côté de l'autre, ces coussins sont disposés l'un contre l'autre par les parties transversales reliant les branches ou par les extrémités libres des branches.

12. Raccordement selon une des revendications précédentes, caractérisé en ce que l'appui axial entre les extrémités de tuyau (3, 4) et les coussins d'étanchéité (6, 7; 16, 17) est obtenu par des changements de section (11, 12) des extrémités de tuyau.

13. Raccordement selon la revendication 6, caractérisé en ce que l'appui axial entre les extrémités de tuyau (3, 4) et les coussins d'étanchéité (6, 7; 17) est obtenu par des joncs (10, 13) ou des éléments analogues mis en place dans des gorges circonférentielles des extrémités de tuyau.

14. Raccordement selon la revendication 10, caractérisé en ce que les extrémités libres des tuyaux (29, 32) sont rabattues autour de l'extrémité libre coordonnée d'une branche du coussin d'étanchéité (27, 28), de manière à la sertir.

15. Raccordement selon la revendication 10, caractérisé en ce que l'extrémité libre d'une branche du coussin d'étanchéité (27, 28) est pressée contre la paroi voisine (24) d'un tuyau par une bague de serrage (30) agissant radialement.

16. Raccordement selon la revendication 6, caractérisé en ce que les extrémités de tuyau (33, 34) présentent des collets (35, 36) orientés radialement, entre lesquels est disposé le coussin d'étanchéité (38), éventuellement soutenu intérieurement par au moins une des extrémités de tuyau, que la partie (37) s'étendant axialement par-dessus le coussin d'étanchéité et soutenant ce coussin extérieurement, part d'un des collets (35), qu'une surface d'appui (41) dirigée radialement vers l'extérieur se raccorde à l'extrémité libre de cette partie, que l'autre collet (36), en passant par des ouvertures, traverse ladite partie (37) et/ou la surface d'appui (41) par des prolongements terminaux (42), que les prolongements sont dirigés radialement vers l'extérieur à distance axiale de la surface d'appui, de manière à former des surfaces de contre-appui (44), et qu'au moins un coussin d'appui (45), possédant des propriétés élastiques amorties, est disposé entre la surface d'appui et les surfaces de contre-appui.

17. Raccordement selon la revendication 16, caractérisé en ce que le coussin d'appui (45) est un anneau faisant tout le tour.

18. Raccordement selon la revendication 16, caractérisé en ce que le coussin d'appui (45) est constitué de plusieurs éléments de coussin répartis symétriquement sur la circonférence et qui sont maintenus radialement à l'extérieur par des prolongements (46) de la surface d'appui (41) et/ou des surfaces de contre-appui (44).

19. Raccordement selon la revendication 7, caractérisé en ce que des coussins d'appui (55, 56; 65, 66) de forme annulaire ou composés d'éléments répartis symétriquement sur la circonférence, possédant des propriétés élastiques amorties, sont disposés entre les rabats (53, 54; 63, 64) et les collets (49, 50; 59, 60).

20. Raccordement selon la revendication 7 ou 19, caractérisé en ce que les collets (59, 60) sont dirigés obliquement l'un vers l'autre et les rabats (63, 64) ainsi que les faces adjacentes du coussin d'étanchéité (61) sont parallèles à eux.

21. Raccordement selon une des revendications 7, 19 ou 20, caractérisé en ce que le coussin d'étanchéité (61) est soutenu radialement à l'intérieur par les extrémités de tuyau (57, 58).

22. Raccordement selon une des revendications précédentes, caractérisé en ce que le coussin d'étanchéité et/ou le coussin d'appui est formé par compression d'un matériau céramique ou métallique sous la forme d'un voile, treillis, tissu, tricot ou analogue en fibres ou fils.

23. Raccordement selon la revendication 22, caractérisé en ce que le coussin d'étanchéité et/ou le coussin d'appui est formé ou revêtu en partie au moins d'un matériau ayant les propriétés d'un palier lisse.

24. Raccordement selon la revendication 22 ou 23, caractérisé en ce que le coussin d'étanchéité et/ou le coussin d'appui est comprimé avec inclusion d'un produit de glissement et d'étanchéité.

25. Raccordement selon une des revendications 22 à 24, caractérisé en ce que le coussin d'étanchéité et/ou le coussin d'appui contient au moins une pièce de support ayant une plus grande dureté ou résistance que le matériau du coussin.

26. Raccordement selon une des revendications précédentes, caractérisé en ce qu'une isolation thermique (8) est disposée radialement à l'intérieur des coussin d'étanchéité et, éventuellement, des coussins d'appui.

Fig . 1

Fig . 2

Fig. 3

Fig. 4

Fig. 5

Fig. 6

14